# EUROPEAN PATENT SPECIFICATION

(11) **EP 4 166 925 B1**
(45) Date of publication and mention of the grant of the patent: **28.08.2024**
(21) Application number: 22201347.6
(22) Date of filing: 13.10.2022
(51) Int. Cl.: G01N 15/0205, B64D 15/20, G01S 17/95, G01S 7/48, G01N 15/075, G01N 15/00

(54) **DETECTION OF AIRCRAFT ICING CONDITIONS AND DETERMINATION OF LIQUID CLOUD DROPLET SIZE**
ERKENNUNG VON FLUGZEUGVEREISUNGSBEDINGUNGEN UND BESTIMMUNG DER GRÖSSE VON FLÜSSIGKEITSWOLKENTRÖPFCHEN
DÉTECTION DE CONDITIONS DE GIVRAGE D'AÉRONEF ET DÉTERMINATION DE LA TAILLE DE GOUTTELETTES DE NUAGE LIQUIDE

(30) Priority: 18.10.2021 US 202117503728
(43) Date of publication of application: 19.04.2023
(73) Proprietor: ROSEMOUNT AEROSPACE INC., Burnsville, MN 55306-4898 (US)
(72) Inventor: ANDERSON, Kaare Josef, Farmington, 55024 (US); RAY, Mark, Burnsville, 55306 (US); RAMTHUN, Kent Allan, Shakopee, 55379 (US); MILLER, Mark Sherwood, Lakeville, 55044 (US)
(74) Representative: Dehns

(56) References cited:
- US-A1- 2011 019 188
- US-A1- 2021 055 422
- KAARE J. ANDERSON ET AL: "SLD and Ice Crystal Discrimination with the Optical Ice Detector", SAE 2010 COMMERCIAL VEHICLE ENGINEERING CONGRESS SAE TECHNICAL PAPERS, vol. 1, 10 June 2019 (2019-06-10), US, XP055636115, ISSN: 0148-7191, DOI: 10.4271/2019-01-1934

## Description

### BACKGROUND

The present disclosure relates generally to optical sensors, and in particular to an optical icing conditions sensor for an aircraft.

It is desirable to enable an optical sensor to both detect potential icing conditions and determine a representative droplet size within clouds containing water droplets. Different droplet sizes can require particular safety processes to be enabled. However, some droplet size estimation methods are performed using short pulse width lasers, and these methods require highspeed, sensitive electronics to detect the cloud reflection signals generated by the short pulse width lasers US 2021/055422 A1 discloses an apparatus and associated methods which relate to determining an effective size, quantity, shape, and type of water particles in a cloud atmosphere based on differences in amplitudes of optical signals backscattered at different backscattering angles. Off-axis backscattering-backscattering at angles other than 180 degrees-is affected by the effective size, quantity, shape, and type of water droplets. Detected amplitudes of optical signals that are backscattered at different angles are used to indicate the effective size, quantity, shape, and type of water particles in the cloud atmosphere. In some embodiments, optical emitters and detectors are configured to measure amplitudes of optical signals backscattered at backscattering angles of both on-axis-180 degrees-and off-axis varieties.

### SUMMARY

A method of operating an optical icing conditions sensor for an aircraft is described herein and defined in claim 1.

Further, an optical icing conditions sensor for an aircraft is described herein and defined in claim 10.

### BRIEF DESCRIPTION OF THE DRAWINGS

The subject matter, which is regarded as the disclosure, is particularly pointed out and distinctly claimed in the claims at the conclusion of the specification. The following descriptions of the drawings should not be considered limiting in any way.
FIG. 1 is a schematic view of an optical icing conditions sensor.
FIG. 2 is a schematic depiction of a controller for the optical icing conditions sensor of FIG. 1.
FIG. 3 is a polar plot of the scattering intensity of water droplets.
FIG. 4A is a graph of water droplet scattering intensity for a water droplet size distribution having median volumetric diameter of 15 micrometers over a range of scattering angles.
FIG. 4B is a graph of water droplet scattering intensity for a water droplet size distribution having median volumetric diameter of 50 micrometers over a range of scattering angles.
FIG. 4C is a graph of water droplet scattering intensity for a water droplet size distribution having median volumetric diameter of 200 micrometers over a range of scattering angles.
FIG. 4D is a graph of water droplet scattering intensity for a water droplet size distribution having median volumetric diameter of 500 micrometers over a range of scattering angles.
FIG. 5 depicts a method of operating an optical icing conditions sensor.

### DETAILED DESCRIPTION

An optical icing conditions sensor detects clouds and determines a median volumetric diameter of water droplets in the cloud. The optical icing conditions sensor contains a receiver array which can measure received light intensity over a range of angles to determine at which angle a scattering intensity peak occurs. Liquid water droplets will exhibit different scattering intensity characteristics (in particular, a different angle at which a scattering intensity peak occurs and a different breadth of the scattering intensity peak) depending on their size.

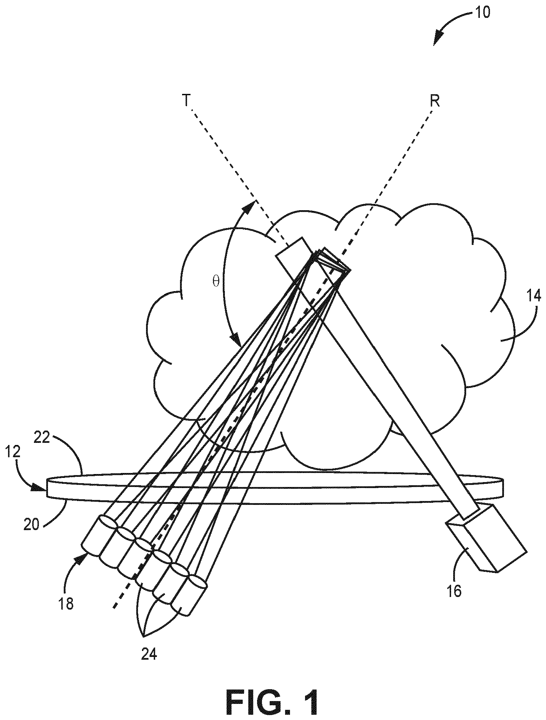

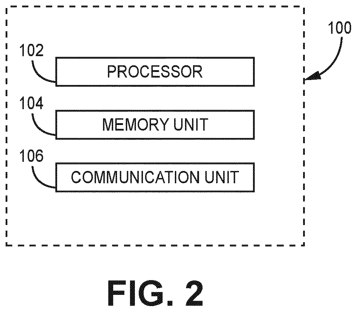

FIG. 1 depicts optical icing conditions sensor (OICS) 10, optical window 12, and cloud 14. OICS 10 includes transmitter 16 and receiver array 18. OICS 10 can additionally include a controller, such as controller 100 (shown in FIG 2). Optical window 12 can have inner surface 20 and outer surface 22. Receiver array 18 includes receivers 24.

Optical window 12 can be an optically transparent window which is located on a surface of an aircraft such that outer surface 22 contacts the air surrounding the aircraft. OICS 10 can be located adjacent to inner surface 20 of optical window 12 such that OICS 10 is within the aircraft. Transmitter 16 can be an optical transmitter. Transmitter 16 can be configured to transmit a light beam at a wavelength, which can be in the range of visible or infrared light depending upon the selected transmitter 16 and/or receiver array 18. In some examples, the wavelength can be between 400 and 500 nanometers, and in particular can be 445 nanometers. In other examples, the wavelength can be between 800 and 1000 nanometers, and in particular can be 920 nanometers. In some examples, OICS 10 can include multiple transmitters 16, and each transmitter 16 can be configured to transmit light at a particular wavelength. Receiver array 18 can include at least one optical receiver 24. In some examples, receiver array 18 can include a plurality of receivers 24. Receiver array 18 can be configured to receive light over a range of angles. Receiver array 18 can be configured to receive light at the wavelength. The wavelength can be selected to have a difference in scattering intensities for different droplet sizes. Each of the plurality of receivers 24 has a receiver field of view. The receiver fields of view of the plurality of receivers 24 define the receiver array field of view such that the receiver fields of view cover the range of receiving angles.

Transmitter 16 is oriented along transmitter path T, such that transmitter 16 emits a light beam at the wavelength along transmitter path T during operation. Transmitter 16 emits the light beam at a transmitting angle defined by transmitter path T and optical window 12.

Receiver array 18 is oriented along receiver array path R, such that receiver array 18 receives light at the wavelength along receiver array path R during operation. Receiver array 18 receives light at the wavelength at a plurality of receiving angles defined by receiver array path R and optical window 12. Each receiving angle can correspond to a receiver 24 within receiver array 18.

During operation, the light beam emitted by transmitter 16 illuminates an illumination volume in cloud 14. Each receiver 24 has a receiver field of view. Receiver array 18 has a receiver array field of view, which is made up of the receiver fields of view for all of the receivers 24 within receiver array 18. These receiver fields of view are centered on receiver array path R such that the receiver array field of view extends above and below the angle at which receiver array path R is oriented. The receiver array field of view covers a range of angles over which receiver array 18 can receive light. Receiver array 18 is configured to receive light having the first wavelength over the receiver array field of view during operation. OICS 10 is configured such that the receiver array field of view overlaps with the illumination volume at a predetermined distance. The predetermined distance can be defined as the distance from outer surface 22 of optical window 12 at which the overlap occurs. These overlaps allow receiver array 18 to receive light from transmitter 16 following reflection by water in cloud 14.

Transmitter path T and receiver array path R intersect at a distance from outer surface 22 of optical window 12. The intersection of transmitter path T and receiver array path R forms reflecting angle θ. In the depicted embodiment, reflecting angle θ is approximately 136 degrees. Reflecting angle θ can be selected such that light emitted along transmitter path T can be reflected by water droplets in cloud 14 and subsequently travel along receiver array path R to receiver array 18. As described below, reflecting angle θ can be selected such that it is approximately a rainbow angle. During operation, reflecting angle θ can be defined as the angle between the light beam transmitted at the transmitting angle and light received by receiver array 18 at the receiving angle. In the depicted example, reflecting angle θ is 136 degrees, and the receiver array field of view extends from 126 degrees to 146 degrees. Reflecting angle θ can have a tolerance of approximately ± 1 degree.

As described below in more detail, transmitter 16 and receiver array 18 allow OICS 10 to estimate the median volumetric diameter (MVD) of water droplets present in clouds. The MVD is the droplet diameter below which, and above which, half of the cumulative water content in a cloud is contained. For example, a cloud having an MVD of 15 micrometers signifies that half of the water content in the cloud is contained in droplets which have a diameter of less than 15 micrometers, and the other half of the cloud's water content is contained in droplets which have a diameter greater than 15 micrometers. Liquid water droplets in clouds exhibit scattering behavior which includes a peak at a particular "rainbow" angle, and the scattering behavior varies based on the MVD of the water droplets. An optical sensor (such as OICS 10) can be configured to discriminate between these behaviors to determine the MVD of the water droplets within the detected cloud.

FIG. 2 is a schematic depiction of controller 100. Controller 100 can include processor 102, memory unit 104, and communication unit 106. In some embodiments, controller 100 can include multiple processors 102, memory units 104, and communication units 106. Controller 100 can additionally include more components, such as an input device, an output device, and/or a power source.

Processor 102 can be configured to implement functionality and/or process instructions for execution within controller 100. For example, processor 102 can be capable of processing instructions stored in memory unit 104. Examples of processor 102 can include any one or more of a microprocessor, a controller, a digital signal processor (DSP), an application specific integrated circuit (ASIC), a field-programmable gate array (FPGA), or other equivalent discrete or integrated logic circuitry. Instructions executed by processor 102 can cause controller 100 to perform actions, such as receiving and measuring input data from receivers within OICS 10, comparing these measurements to threshold values, and using these measurement comparisons to determine if a cloud is present.

Controller 100 can also include memory capable of storage, such as memory unit 104. Memory unit 104 can be configured to store information (and/or instructions which may be executable by processor 102) within controller 100 during operation. Memory unit 104, in some examples, is described as a computer-readable storage medium. In some examples, a computer-readable storage medium can include a non-transitory medium. The term "nontransitory" can indicate that the storage medium is not embodied in a carrier wave or a propagated signal. In certain examples, a non-transitory storage medium can store data that can, over time, change (e.g., in RAM or cache). In some examples, memory unit 104 is a temporary memory, meaning that a primary purpose of memory unit 104 is not long-term storage. Memory unit 104, in some examples, is described as volatile memory, meaning that memory unit 104 does not maintain stored contents when power to controller 100 is turned off. Examples of volatile memories can include random access memories (RAM), dynamic random access memories (DRAM), static random access memories (SRAM), and other forms of volatile memories. In some examples, memory unit 104 is used to store program instructions for execution by processor 102.

Memory unit 104 can be configured to store larger amounts of information than volatile memory. Memory unit 104 can further be configured for long-term storage of information. In some examples, memory unit 104 includes non-volatile storage elements. Examples of such nonvolatile storage elements can include magnetic hard discs, optical discs, flash memories, or forms of electrically programmable memories (EPROM) or electrically erasable and programmable (EEPROM) memories.

Controller 100 can also include communication unit 106. Controller 100 can utilize communication unit 106 to communicate with devices via one or more networks, such as one or more wireless or wired networks or both. Communication unit 106 can be a network interface card, such as an Ethernet card, an optical transceiver, a radio frequency transceiver, or any other type of device that can send and receive information. For example, communication unit 106 can be a radio frequency transmitter dedicated to Bluetooth or WiFi bands or commercial networks such as GSM, UMTS, 3G, 4G, 5G, and others. Alternately, communication unit 106 can be a Universal Serial Bus (USB).

Controller 100 can include an input device, such as a presence-sensitive and/or touch-sensitive display, or other type of device configured to receive input from a user. Controller 100 can include an output device, such as a display device, a speaker, a liquid crystal display (LCD), a light emitting diode (LED) display, an organic light emitting diode (OLED) display, discrete switched outputs, or other type of device for outputting information in a form understandable to users or machines.

Controller 100 can be configured to receive and measure input data from one or more receivers within OICS 10. For example, controller 100 can be configured to measure an intensity of light received by receiver array 18. Controller 100 can be further configured to compare measurements to one or more threshold values. For example, controller 100 can be configured to compare the intensity to a threshold value. Controller 100 can be further configured to use measurement comparisons to determine if a cloud is present. For example, controller 100 can be configured to determine that a cloud is present if the intensity exceeds the threshold value.

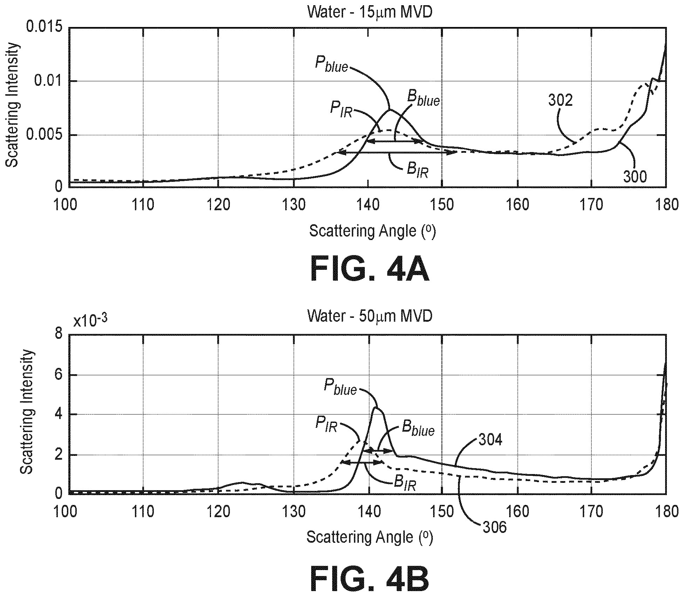

If controller 100 determines a cloud to be present, controller 100 can be configured to calculate scattering profile data of water droplets within the cloud to determine an MVD of the water droplets. This scattering profile data can include the angle at which a scattering intensity peak occurs and the breadth of the scattering intensity peak. The breadth of scattering intensity peaks (such as those shown in FIGS. 4A-4D) can be defined as the full width at half maximum (in this case, half the value of the maximum scattering intensity) after subtraction of the background signal from ambient light sources. The background signal can be defined as an interpolation of the measured light intensity from points which are ± 15 degrees from the scattering intensity peak. Controller 100 can be further configured to use this scattering profile data to estimate the MVD using reference data, such as a look-up table. Controller 100 can be configured to communicate the droplet size to another component of the aircraft, such as a display screen or a de-icing system. Controller 100 allows OICS 10 to determine a representative droplet size of water droplet, as defined by the MVD, within a cloud (such as cloud 14 in FIG. 1) detected in the vicinity of the aircraft.

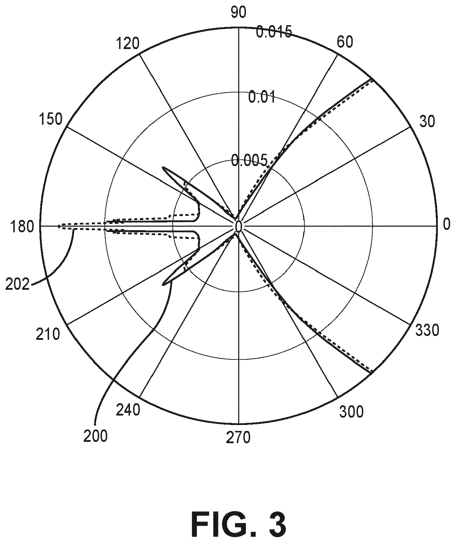

FIG. 3 is a polar plot of the scattering intensity of water droplets. In FIG. 3, the angular coordinates denote the angle of incident light (the angle at which light strikes a water droplet), and the radial coordinates denote the scattering intensity for each angle of incident light. Blue trend line 200 depicts scattering intensities at 445 nanometers, and infrared trend line 202 depicts scattering intensities at 920 nanometers. The scattering data displayed in FIG. 3 corresponds to water droplets having MVD of 15 micrometers. While the scattering data for water droplets having MVD of 15 micrometers is shown here, water droplets having a different size will exhibit similar behavior (showing a scattering intensity peak).

When light illuminates liquid water droplets, such as those that make up a cloud, the water droplets have a scattering intensity which is dependent on the angle at which light illuminates the water droplets. For a range of angles, the water droplets have a corresponding range of scattering intensities. This range of scattering intensities will peak at approximately a rainbow angle. The rainbow angle has a tolerance of approximately ± 1 degree. The rainbow angle can vary based on the wavelength of the light which is interacting with the water droplets. The range of scattering intensities will also vary based on the size of the water droplets, and a particular droplet size will correspond to a particular maximum scattering intensity/ rainbow angle, as well as to a particular breadth of the scattering intensity peak. This difference in scattering behaviors allows for an OICS, such as OICS 10, to estimate the MVD of water droplets within a cloud.

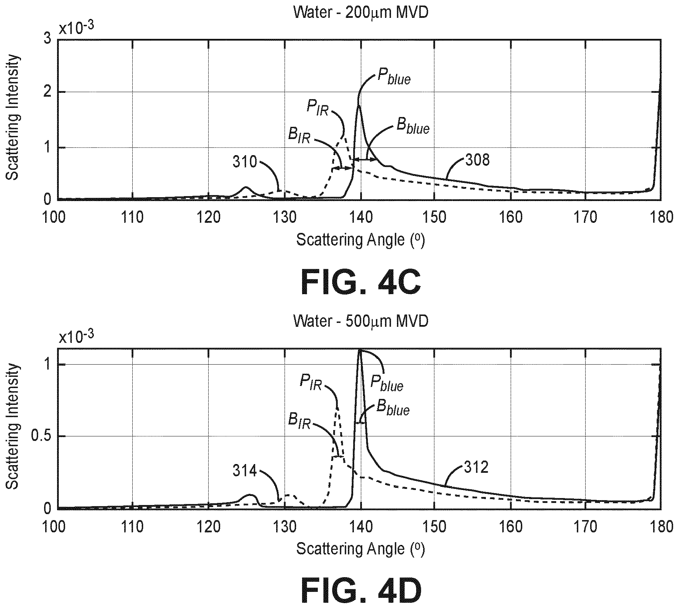

FIG. 4A is a graph of water droplet scattering intensity for a water droplet size distribution having MVD of 15 micrometers over a range of scattering angles. FIG. 4B is a graph of water droplet scattering intensity for a water droplet size distribution having MVD of 50 micrometers over a range of scattering angles. FIG. 4C is a graph of water droplet scattering intensity for a water droplet size distribution having MVD of 200 micrometers over a range of scattering angles. FIG. 4D is a graph of water droplet scattering intensity for a water droplet size distribution having MVD of 500 micrometers over a range of scattering angles. FIGS. 4A-4D will be discussed in turn below.

In FIG. 4A, blue trend line 300 depicts scattering intensities at 445 nm, and infrared trend line 302 depicts scattering intensities at 920 nm. As described above in reference to FIG. 3, water droplets have a varying scattering intensity across a range of angles, with an approximate maximum scattering intensity at a rainbow angle. The particular angle at which the maximum scattering intensity occurs depends on parameters such as the wavelength of light and the size of the water droplets. The calculation of the scattering intensity peak breadth and the background signal subtraction can be performed by a controller, such as controller 100.

Blue trend line 300 and infrared trend line 302 exhibit similar behavior from 100 degrees to 180 degrees. Blue trend line 300 and infrared trend line 302 generally increase from approximately 120 degrees to approximately 145 degrees, decrease from approximately 145 degrees to approximately 165 degrees, and increase from approximately 165 degrees to 180 degrees. The maximum scattering intensity along blue trend line 300 is approximately 0.0075, and the maximum scattering intensity along infrared trend line 302 is approximately 0.005. Blue trend line 300 has scattering intensity peak *P_{blue}* at approximately 144 degrees and scattering intensity peak breadth *B_{blue}.* Infrared trend line 302 has scattering intensity peak *P_{IR}* at approximately 143 degrees and scattering intensity peak breadth *B_{IR}.*

In FIG. 4B, blue trend line 304 depicts scattering intensities at 445 nm, and infrared trend line 306 depicts scattering intensities at 920 nm. In the same manner as blue trend line 300 and infrared trend line 302 described above in reference to FIG. 4A, blue trend line 304 and infrared trend line 306 exhibit similar behavior from 100 degrees to 180 degrees. Blue trend line 304 has scattering intensity peak *P_{blue}* at approximately 141 degrees and scattering intensity peak breadth *B_{blue}.* Infrared trend line 306 has scattering intensity peak *P_{IR}* at approximately 139 degrees and scattering intensity peak breadth *B_{IR}.*

In FIG. 4C, blue trend line 308 depicts scattering intensities at 445 nm, and infrared trend line 310 depicts scattering intensities at 920 nm. In the same manner as blue trend line 300 and infrared trend line 302 described above in reference to FIG. 4A, blue trend line 308 and infrared trend line 310 exhibit similar behavior from 100 degrees to 180 degrees. Blue trend line 308 has scattering intensity peak *P_{blue}* at approximately 140 degrees and scattering intensity peak breadth *B_{blue}.* Infrared trend line 310 has scattering intensity peak *P_{IR}* at approximately 137 degrees and scattering intensity peak breadth *B_{IR}.*

In FIG. 4D, blue trend line 312 depicts scattering intensities at 445 nm, and infrared trend line 314 depicts scattering intensities at 920 nm. In the same manner as blue trend line 300 and infrared trend line 302 described above in reference to FIG. 4A, blue trend line 312 and infrared trend line 314 exhibit similar behavior from 100 degrees to 180 degrees. Blue trend line 312 has scattering intensity peak *P_{blue}* at approximately 140 degrees and scattering intensity peak breadth *B_{blue}.* Infrared trend line 314 has scattering intensity peak *P_{IR}* at approximately 136 degrees and scattering intensity peak breadth *B_{IR}.*

The angle at which the scattering intensity peak occurs will generally decrease as the droplet size (as defined by MVD) increases. The scattering intensity peak breadth will generally decrease as the droplet size (as defined by MVD) increases. The angle of the scattering intensity peak and the breadth of the scattering intensity peak can be used to allow an OICS, such as OICS 10, to determine the representative droplet size present in a cloud such as cloud 14.

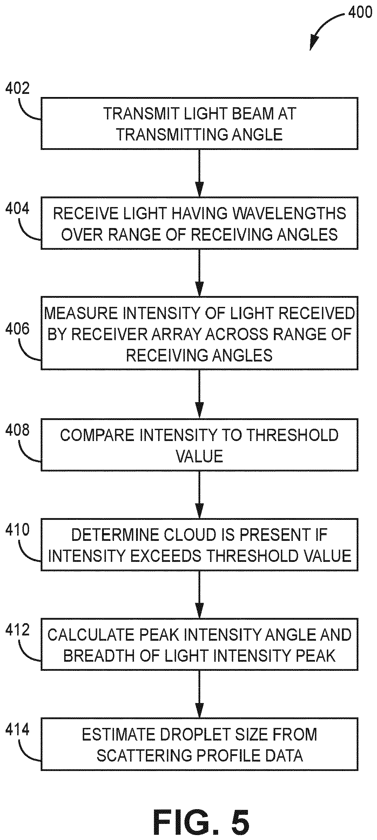

FIG. 5 depicts a method of operating an optical icing conditions sensor, such as OICS 10. Method 400 includes steps 402-414.

In step 402, a light beam is transmitted at a transmitting angle. This can be performed by, for example, a transmitter such as transmitter 16 described above in reference to FIG. 1. The light beam can have a wavelength, which in some examples can be 445 nm, and in other examples can be 920 nm.

In step 404, light having the wavelength is received over a range of receiving angles. This can be performed by, for example, a receiver array such as receiver array 18 described above in reference to FIG. 1. The receiver array can receive light from the transmitter, background light from other sources (such as the sun), or a combination of both.

In step 406, the intensity of light received by the receiver array in step 404 is measured. This can be performed by, for example, a controller such as controller 100 described above in reference to FIG. 2.

In step 408, the controller can compare the intensity of light measured in step 406 to a threshold value. The threshold value allows the controller to estimate if at least a portion of the light emitted by the transmitter was received by the receiver array. The threshold value can be selected based on the amount of light the transmitter emits. It should be understood that the threshold value should be selected to account for an expected amount of ambient background light from other sources. The threshold value can be manually selected (i.e., by a user) or automatically set by the controller or another component of the aircraft.

In step 410, the controller can determine whether a cloud is present. The controller can make this determination by assessing whether the intensity measured in step 406 exceeds the threshold value over the range of receiving angles. If the intensity exceeds the threshold value, the controller can determine that a cloud is present. The selection of the threshold value described above in step 408 thereby allows the controller to determine that, if the threshold value is exceeded, light from the transmitter has reflected off of a cloud and traveled to the receiver array.

In step 412, the controller can calculate scattering profile data based on the outcomes of steps 406-410 if a cloud is determined to be present in step 410. This scattering profile data can include quantities such as a scattering intensity peak angle and the breadth of the scattering intensity peak.

To generate the scattering profile data, the receiver array can receive light having the wavelength over the range of receiving angles and the controller can measure the intensity over the range of receiving angles. The range of receiving angles can include receiving angles which have been selected at discrete increments (for example, 1 degree intervals) or can include a continuous range of angles over which the controller measures scattering intensities. In this way, the controller can generate a scattering intensity profile such as those shown in FIGS. 4A-4D.

In some examples, more than one light beam having more than one wavelength can be used in steps 402-404 and 412 to generate scattering profile data. This can require multiple transmitters which are configured to emit light at the selected wavelengths, and can additionally require multiple threshold values as described in step 408. The use of more than one wavelength can increase the accuracy of droplet size estimations made with the controller.

In step 414, the controller can estimate the droplet size from the scattering profile data collected in step 412. The controller can make this droplet size estimation from, for example, a reference table containing expected scattering profile data for a range of droplet sizes.

The controller can additionally make other determinations about the type of cloud present through inputs from other aircraft components. For example, the controller can receive air temperature data from a temperature sensor. This data can allow the controller to determine whether a cloud contains supercooled liquid droplets. The controller can then communicate this determination to another aircraft component which can begin any required safety mechanisms, such as de-icing processes.

An optical sensor as described above provides numerous advantages. The estimation of droplet size within a cloud allows the tailoring of safety procedures based on expected icing conditions. The OICS described above allows for the use of low-cost lasers and photodetectors. Additionally, these components do not require extremely sensitive electronics, and low-speed digital electronics can be used to receive and measure input signal data.

While the invention has been described with reference to an exemplary embodiment(s), it will be understood by those skilled in the art that various changes may be made without departing from the scope of the invention as it is defined in the appended claims.

In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A method of operating an optical icing conditions sensor (10) for an aircraft, the method comprising:
transmitting (402), with a transmitter (16), a light beam having a wavelength through an optical window (12) of the aircraft at a transmitting angle, wherein the light beam illuminates an illumination volume and the transmitter is oriented along a transmitter path (T) which extends along the transmitting angle;
receiving (404), with a receiver array (18), light over a range of receiving angles along a receiver array path (R), wherein the receiver array is oriented along the receiver array path and receives the light at the wavelength along the receiver array path,
wherein the receiver array is configured to receive the light having the wavelength over a receiver array field of view, and the receiver array field of view overlaps with the illumination volume at a predetermined distance, wherein the receiver array path and the transmitter path intersect at a distance from an outer surface (22) of the optical window;
measuring (406), with a controller, an intensity of the light received by the receiver array;
comparing (408), with the controller, the intensity to a threshold value; determining (410), with the controller, that a cloud is present if the intensity is greater than the threshold value;
calculating (412), with the controller, scattering profile data of the light received by the receiver array if a cloud is determined to be present, wherein the scattering profile data includes an angle of a scattering intensity peak within the range of receiving angles and a breadth of the scattering intensity peak; and
estimating (414), with the controller, a representative droplet size within the cloud using the scattering profile data.

2. The method of claim 1, wherein:
the receiver array comprises a plurality of receivers;
each of the plurality of receivers has a receiver field of view; and
the receiver fields of view of the plurality of receivers define the receiver array field of view such that the receiver fields of view cover the range of receiving angles.

3. The method of any preceding claim, further comprising communicating to a component of the aircraft, with the controller, the representative droplet size.

4. The method of any preceding claim, further comprising:
measuring, with a temperature sensor, a cloud temperature of the cloud; and
determining, with the controller, whether water droplets within the cloud are supercooled.

5. The method of any preceding claim, wherein the representative droplet size is a median volumetric diameter.

6. The method of any preceding claim, wherein the range of receiving angles is centered at approximately 136 degrees with respect to the transmitter path.

7. The method of claim 6, wherein the range of receiving angles extends from approximately 126 degrees to approximately 146 degrees with respect to the transmitter path.

8. The method of any preceding claim, wherein the wavelength is selected from the group consisting of 445 nanometers and 920 nanometers.

9. The method of claim 1 or 2, further comprising:
communicating to a component of the aircraft, with the controller, the representative droplet size;
measuring, with a temperature sensor, a cloud temperature of the cloud; and
determining, with the controller, whether water droplets within the cloud are supercooled;
wherein:
the representative droplet size is a median volumetric diameter;
the range of receiving angles is centered at approximately 136 degrees with respect to the transmitter path and extends from approximately 126 degrees to approximately 146 degrees with respect to the transmitter path; and
the wavelength is selected from the group consisting of 445 nanometers and 920 nanometers.

10. An optical icing conditions sensor (10) for an aircraft, the optical icing conditions sensor comprising:
a transmitter (16) oriented along a transmitter path (T), wherein the transmitter is configured to transmit (402) a light beam having a wavelength through an optical window (12) at a transmitting angle relative to the optical window;
a receiver array (18) configured to receive (404) light having the wavelength over a range of
receiving angles along a receiver array path (R), wherein the receiver array is oriented along the receiver array path and is configured to receive the light at the wavelength along the receiver array path, and the receiver array path and the transmitter path intersect at a distance from an outer surface (22) of the optical window; and a controller (100), wherein the controller is configured to:
measure (406) an intensity of light received by the receiver array over the range of receiving angles;
compare (408) the intensity to a threshold value;
determine (410) that a cloud is present if the intensity is greater than the threshold value;
calculate (412) scattering profile data of the light received by the receiver array if a cloud is determined to be present, wherein the scattering profile data includes an angle of a scattering intensity peak within the range of receiving angles and a breadth of the scattering intensity peak; and
estimate (414) a representative droplet size within the cloud using the scattering profile data.

11. The optical icing conditions sensor of claim 10, wherein the controller is further configured to communicate the representative droplet size to a component of the aircraft.

12. The optical icing conditions sensor of claim 10 or 11, further comprising a temperature sensor which is configured to measure cloud temperature, and wherein the controller is configured to determine whether water droplets within the cloud are supercooled.

13. The optical icing conditions sensor of any of claims 10 to 12, wherein the wavelength is selected from the group consisting of 445 nanometers and 920 nanometers.

14. The optical icing conditions sensor of claim 10, further comprising:
a temperature sensor which is configured to measure cloud temperature;
wherein:
the controller is configured to communicate the representative droplet size to a component of the aircraft;
the controller is configured to determine whether water droplets within the cloud are supercooled;
the representative droplet size is a median volumetric diameter;
the range of receiving angles is centered at approximately 136 degrees with respect to the transmitter path and extends from approximately 126 degrees to approximately 146 degrees with respect to the transmitter path; and
the wavelength is selected from the group consisting of 445 nanometers and 920 nanometers.

## Patentansprüche

1. Verfahren zum Betreiben eines optischen Sensors für Vereisungsbedingungen (10) für ein Flugzeug, wobei das Verfahren umfasst:
Senden (402) eines Lichtstrahls, der eine Wellenlänge aufweist, mit einem Sender (16) durch ein optisches Fenster (12) des Flugzeugs in einem Sendewinkel, wobei der Lichtstrahl ein Beleuchtungsvolumen beleuchtet und der Sender entlang eines Senderpfades (T) ausgerichtet ist, der sich entlang des Sendewinkels erstreckt;
Empfangen (404) von Licht über einen Bereich von Empfangswinkeln entlang eines Empfängeranordnungspfades (R) mit einer Empfängeranordnung (18), wobei die Empfängeranordnung entlang des Empfängeranordnungspfades ausgerichtet ist und das Licht mit der Wellenlänge entlang des Empfängeranordnungspfades empfängt, wobei das Empfänger-Array zum Empfangen von Licht, das die Wellenlänge aufweist, über ein Empfängeranordnungssichtfeld konfiguriert ist, und wobei sich das Empfänger-Array-Sichtfeld mit dem Beleuchtungsvolumen in einem vorbestimmten Abstand überschneidet, wobei sich der Empfänger-Array-Pfad und der Senderpfad in einem Abstand von einer Außenfläche (22) des optischen Fensters schneiden;
Messen (406) einer Intensität des von der Empfängeranordnung empfangenen Lichts durch eine Steuerung;
Vergleichen (408) der Intensität mit einem Schwellenwert mit der Steuerung;
Bestimmen (410) mit der Steuerung, dass eine Wolke vorhanden ist, wenn die Intensität größer als der Schwellenwert ist;
Berechnen (412) von Streuprofildaten des von der Empfängeranordnung empfangenen Lichts mit der Steuerung, wenn das Vorhandensein einer Wolke festgestellt wird, wobei die Streuprofildaten einen Winkel eines Streuintensitäts-Peaks innerhalb des Bereichs der Empfangswinkel und eine Breite des Streuintensitäts-Peaks beinhalten; und
Schätzen (414) einer repräsentativen Tröpfchengröße innerhalb der Wolke mit der Steuerung unter Verwendung der Streuprofildaten.

2. Verfahren nach Anspruch 1, wobei:
die Empfängeranordnung eine Vielzahl von Empfängern umfasst;
jeder der Vielzahl von Empfängern ein Empfängersichtfeld aufweist; und
die Empfängersichtfelder der Vielzahl von Empfängern das Empfängeranordnungssichtfeld so definieren, dass die Empfängersichtfelder den Bereich der Empfangswinkel abdecken.

3. Verfahren nach einem der vorstehenden Ansprüche, ferner umfassend Übermitteln der repräsentativen Tröpfchengröße an eine Komponente des Flugzeugs mit der Steuerung.

4. Verfahren nach einem der vorstehenden Ansprüche, ferner umfassend:
Messen der Wolkentemperatur der Wolke mit einem Temperatursensor; und
Bestimmen mit der Steuerung, ob die Wassertropfen in der Wolke unterkühlt sind.

5. Verfahren nach einem der vorstehenden Ansprüche, wobei die repräsentative Tröpfchengröße ein mittlerer Volumendurchmesser ist.

6. Verfahren nach einem der vorstehenden Ansprüche, wobei der Bereich der Empfangswinkel in Bezug auf den Senderpfad bei etwa 136 Grad zentriert ist.

7. Verfahren nach Anspruch 6, wobei sich der Bereich der Empfangswinkel in Bezug auf den Senderpfad von ungefähr 126 Grad bis ungefähr 146 Grad erstreckt.

8. Verfahren nach einem der vorstehenden Ansprüche, wobei die Wellenlänge aus der Gruppe bestehend aus 445 Nanometern und 920 Nanometern ausgewählt wird.

9. Verfahren nach Anspruch 1 oder 2, ferner umfassend:
Übermitteln der repräsentativen Tröpfchengröße an eine Komponente des Flugzeugs mit der Steuerung.
Messen der Wolkentemperatur der Wolke mit einem Temperatursensor; und
Bestimmen mit der Steuerung, ob Wassertröpfchen innerhalb der Wolke unterkühlt sind;
wobei:
die repräsentative Tröpfchengröße ein mittlerer Volumendurchmesser ist;
der Bereich der Empfangswinkel in Bezug auf den Senderpfad bei ungefähr 136 Grad zentriert ist und sich in Bezug auf den Senderpfad von ungefähr 126 Grad bis ungefähr 146 Grad erstreckt; und
die Wellenlänge aus der Gruppe bestehend aus 445 Nanometern und 920 Nanometern ausgewählt wird.

10. Optischer Sensor für Vereisungsbedingungen (10) für ein Flugzeug, wobei der optische Sensor für Vereisungsbedingungen Folgendes umfasst:
einen Sender (16), der entlang eines Senderpfades (T) ausgerichtet ist, wobei der Sender konfiguriert ist zum Senden (402) eines Lichtstrahls mit einer Wellenlänge durch ein optisches Fenster (12) in einem Übertragungswinkel relativ zu dem optischen Fenster;
eine Empfängeranordnung (18), die zum Empfangen (404) von Licht mit einer Wellenlänge über einen Bereich von Empfangswinkeln entlang eines Empfängerarraypfades (R) konfiguriert ist, wobei die Empfängeranordnung entlang des Empfängeranordnungspfades ausgerichtet ist und zum Empfangen von Licht mit der Wellenlänge entlang des Empfängeranordnungspfades konfiguriert ist, und sich der Empfängeranordnungspfad und der Senderpfad in einem Abstand von einer Außenfläche (22) des optischen Fensters schneiden; und
eine Steuerung (100), wobei die Steuerung konfiguriert ist zum:
Messen (406) einer Lichtintensität, die von der Empfängeranordnung über den Bereich der Empfangswinkel empfangen wird;
Vergleichen (408) der Intensität mit einem Schwellenwert;
Bestimmen (410), dass eine Wolke vorhanden ist, wenn die Intensität größer als der Schwellenwert ist;
Berechnen (412) von Streuprofildaten des von der Empfängeranordnung empfangenen Lichts mit der Steuerung, wenn das Vorhandensein einer Wolke festgestellt wird, wobei die Streuprofildaten einen Winkel eines Streuintensitäts-Peaks innerhalb des Bereichs der Empfangswinkel und eine Breite des Streuintensitäts-Peaks beinhalten; und
Schätzen (414) einer repräsentativen Tröpfchengröße innerhalb der Wolke unter Verwendung der Streuprofildaten.

11. Optischer Sensor für Vereisungsbedingen nach Anspruch 10, wobei die Steuerung ferner zum Übermitteln der repräsentativen Tröpfchengröße an eine Komponente des Flugzeugs konfiguriert ist.

12. Optischer Sensor für Vereisungsbedingen nach Anspruch 10 oder 11, ferner umfassend einen Temperatursensor, der zum Messen der Wolkentemperatur konfiguriert ist, und wobei die Steuerung zum Bestimmen konfiguriert ist, ob Wassertröpfchen in der Wolke unterkühlt sind.

13. Optischer Sensor für Vereisungsbedingen nach einem der Ansprüche 10 bis 12, wobei die Wellenlänge aus der Gruppe bestehend aus 445 Nanometern und 920 Nanometern ausgewählt ist.

14. Optischer Sensor für Vereisungsbedingen nach Anspruch 10, ferner umfassend:
einen Temperatursensor, der zum Messen der Wolkentemperatur konfiguriert ist;
wobei:
die Steuerung zum Übermitteln der repräsentativen Tröpfchengröße an eine Komponente des Flugzeugs konfiguriert ist;
die Steuerung zum Bestimmen konfiguriert ist, ob die Wassertröpfchen in der Wolke unterkühlt sind;
die repräsentative Tröpfchengröße ein mittlerer Volumendurchmesser ist;
der Bereich der Empfangswinkel in Bezug auf den Senderpfad bei ungefähr 136 Grad zentriert ist und sich in Bezug auf den Senderpfad von ungefähr 126 Grad bis ungefähr 146 Grad erstreckt; und
die Wellenlänge aus der Gruppe bestehend aus 445 Nanometern und 920 Nanometern ausgewählt ist.

## Revendications

1. Procédé de fonctionnement d'un capteur optique de conditions de givrage (10) pour un aéronef, le procédé comprenant :
la transmission (402), avec un émetteur (16), d'un faisceau lumineux ayant une longueur d'onde à travers une fenêtre optique (12) de l'aéronef selon un angle de transmission, dans lequel le faisceau lumineux éclaire un volume d'éclairage et l'émetteur est orienté le long d'un trajet d'émetteur (T) qui s'étend le long de l'angle de transmission ;
la réception (404), avec un réseau de récepteurs (18), de lumière sur une plage d'angles de réception le long d'un trajet de réseau de récepteurs (R), dans lequel le réseau de récepteurs est orienté le long du trajet de réseau de récepteurs et reçoit la lumière à la longueur d'onde le long du trajet de réseau de récepteurs,
dans lequel le réseau de récepteurs est configuré pour recevoir la lumière ayant la longueur d'onde sur un champ de vision de réseau de récepteurs, et le champ de vision de réseau de récepteurs chevauche le volume d'éclairage à une distance prédéterminée, dans lequel le trajet de réseau de récepteurs et le trajet d'émetteur se croisent à distance d'une surface externe (22) de la fenêtre optique ;
la mesure (406), avec un dispositif de commande, d'une intensité de la lumière reçue par le réseau de récepteurs ;
la comparaison (408), avec le dispositif de commande, de l'intensité à une valeur seuil ;
la détermination (410), avec le dispositif de commande, qu'un nuage est présent si l'intensité est supérieure à la valeur seuil ;
le calcul (412), avec le dispositif de commande, de données de profil de diffusion de la lumière reçue par le réseau de récepteurs s'il est déterminé qu'un nuage est présent, dans lequel les données de profil de diffusion comportent un angle d'un pic d'intensité de diffusion dans la plage d'angles de réception et une largeur du pic d'intensité de diffusion ; et
l'estimation (414), avec le dispositif de commande, d'une taille de gouttelettes représentative à l'intérieur du nuage à l'aide des données de profil de diffusion.

2. Procédé selon la revendication 1, dans lequel :
le réseau de récepteurs comprend une pluralité de récepteurs ;
chacun de la pluralité de récepteurs possède un champ de vision de récepteur ; et
les champs de vision de récepteur de la pluralité de récepteurs définissent le champ de vision de réseau de récepteurs de sorte que les champs de vision de récepteur couvrent la plage d'angles de réception.

3. Procédé selon une quelconque revendication précédente, comprenant en outre la communication à un composant de l'aéronef, avec le dispositif de commande, de la taille représentative des gouttelettes.

4. Procédé selon une quelconque revendication précédente, comprenant en outre :
la mesure, avec un capteur de température, d'une température de nuage du nuage ; et
le fait de déterminer, avec le dispositif de commande, si les gouttelettes d'eau à l'intérieur du nuage sont en surfusion.

5. Procédé selon une quelconque revendication précédente, dans lequel la taille représentative des gouttelettes est un diamètre volumétrique médian.

6. Procédé selon une quelconque revendication précédente, dans lequel la plage d'angles de réception est centrée à environ 136 degrés par rapport au trajet d'émetteur.

7. Procédé selon la revendication 6, dans lequel la plage d'angles de réception s'étend d'environ 126 degrés à environ 146 degrés par rapport au trajet d'émetteur.

8. Procédé selon une quelconque revendication précédente, dans lequel la longueur d'onde est sélectionnée dans le groupe constitué de 445 nanomètres et 920 nanomètres.

9. Procédé selon la revendication 1 ou 2, comprenant en outre :
la communication à un composant de l'aéronef, avec le dispositif de commande, de la taille représentative des gouttelettes ;
la mesure, avec un capteur de température, d'une température de nuage du nuage ; et
le fait de déterminer, avec le dispositif de commande, si les gouttelettes d'eau à l'intérieur du nuage sont en surfusion ;
dans lequel :
la taille représentative des gouttelettes est un diamètre volumétrique médian ;
la plage d'angles de réception est centrée à environ 136 degrés par rapport au trajet d'émetteur et s'étend d'environ 126 degrés à environ 146 degrés par rapport au trajet d'émetteur ; et
la longueur d'onde est choisie dans le groupe constitué de 445 nanomètres et 920 nanomètres.

10. Capteur optique de conditions de givrage (10) pour un aéronef, le capteur optique de conditions de givrage comprenant :
un émetteur (16) orienté le long d'un chemin d'émetteur (T), dans lequel l'émetteur est configuré
pour transmettre (402) un faisceau lumineux ayant une longueur d'onde à travers une fenêtre optique (12) selon un angle de transmission par rapport à la fenêtre optique ;
un réseau de récepteurs (18) configuré pour recevoir (404) une lumière ayant la longueur d'onde sur une plage d'angles de réception le long d'un trajet de réseau de récepteurs (R), dans lequel le réseau de récepteurs est orienté le long du trajet de réseau de récepteurs et est configuré pour recevoir la lumière à la longueur d'onde le long du trajet de réseau de récepteurs, et le trajet de réseau de récepteurs et le trajet d'émetteur se croisent à une distance d'une surface externe (22) de la fenêtre optique ; et
un dispositif de commande (100), dans lequel le dispositif de commande est configuré pour :
mesurer (406) une intensité de lumière reçue par le réseau de récepteurs sur la plage d'angles de réception ;
comparer (408) l'intensité à une valeur seuil ;
déterminer (410) qu'un nuage est présent si l'intensité est supérieure à la valeur seuil ;
le calcul (412) de données de profil de diffusion de la lumière reçue par le réseau de récepteurs s'il est déterminé qu'un nuage est présent, dans lequel les données de profil de diffusion comportent un angle d'un pic d'intensité de diffusion dans la plage d'angles de réception et une largeur du pic d'intensité de diffusion ; et
estimer (414) une taille de gouttelette représentative à l'intérieur du nuage à l'aide des données de profil de diffusion.

11. Capteur optique de conditions de givrage selon la revendication 10, dans lequel le dispositif de commande est en outre configuré pour communiquer la taille représentative des gouttelettes à un composant de l'aéronef.

12. Capteur optique de conditions de givrage selon la revendication 10 ou 11, comprenant en outre un capteur de température qui est configuré pour mesurer la température de nuage, et dans lequel le dispositif de commande est configuré pour déterminer si les gouttelettes d'eau dans le nuage sont en surfusion.

13. Capteur optique de conditions de givrage selon l'une quelconque des revendications 10 à 12, dans lequel la longueur d'onde est sélectionnée dans le groupe constitué de 445 nanomètres et 920 nanomètres.

14. Capteur optique de conditions de givrage selon la revendication 10, comprenant en outre :
un capteur de température qui est configuré pour mesurer la température de nuage ;
dans lequel :
le dispositif de commande est configuré pour communiquer la taille représentative des gouttelettes à un composant de l'aéronef ;
le dispositif de commande est configuré pour déterminer si les gouttelettes d'eau à l'intérieur du nuage sont en surfusion ;
la taille représentative des gouttelettes est un diamètre volumétrique médian ;
la plage d'angles de réception est centrée à environ 136 degrés par rapport au trajet d'émetteur et s'étend d'environ 126 degrés à environ 146 degrés par rapport au trajet d'émetteur ; et
la longueur d'onde est choisie dans le groupe constitué de 445 nanomètres et 920 nanomètres.
